# EUROPÄISCHE PATENTSCHRIFT

(11) **EP 3 983 708 B1**
(45) Veröffentlichungstag und Bekanntmachung des Hinweises auf die Patenterteilung: **03.04.2024**
(21) Anmeldenummer: 20735264.2
(22) Anmeldetag: 09.06.2020
(51) Int. Cl.: F16K 31/08, F16K 17/04

(54) **VENTIL FÜR EIN FLUID**
VALVE FOR A FLUID
SOUPAPE POUR UN FLUIDE

(30) Priorität: 12.06.2019 DE 102019004098
(43) Veröffentlichungstag der Anmeldung: 20.04.2022
(73) Patentinhaber: Truma Gerätetechnik GmbH & Co. KG, 85640 Putzbrunn (DE)
(72) Erfinder: ARMESTO-BEYER, Kai, 85640 Putzbrunn (DE); WEBER, Michael, 85640 Putzbrunn (DE)
(74) Vertreter: Prinz & Partner mbB
(86) Internationale Anmeldenummer: PCT/EP2020/000113
(87) Internationale Veröffentlichungsnummer: WO 2020/249253

(56) Entgegenhaltungen:
- DE-A1- 2 051 401
- DE-A1-102015 009 315
- US-A- 2 745 431
- US-A1- 2016 178 069

## Beschreibung

Die Erfindung bezieht sich auf ein Ventil für ein Fluid. Das Fluid ist beispielsweise eine Flüssigkeit, z. B. Wasser, oder ein Gas.

Im Stand der Technik sind Ventile bekannt, die als Überdruck- oder Ablass-Ventile dienen, indem sie bei einem Überdruck des Fluids einen gesonderten Ablass-Ausgang für das Fluid freigeben.

Um ein schnelles Öffnen und Schließen eines solchen Ventils im Fall eines Überdrucks zu gewährleisten, wird in der DE 2 051 401 A1 ein Ventilkörper durch einen Permanentmagneten in eine Ruhestellung überführt, in welcher eine Fluidpassage für das Fluid verschlossen ist.

Ferner sind aus der DE 10 2015 009 315 A1 sowie der US 2 745 431 A Ventile bekannt.

Die der Erfindung zugrundeliegende Aufgabe besteht darin, ein Ventil für ein Fluid vorzuschlagen, das sich durch ein sprunghaftes Öffnungs- bzw. Verschlussverhalten auszeichnet. Weiterhin ist vorzugsweise auch ein möglichst gut reproduzierbares und vorzugsweise dauerhaft stabiles Ansprechverhalten gegeben
Die Erfindung löst die Aufgabe durch ein Ventil für ein Fluid, mit einem Ventilkörper und einem Ventilsitz, mit einer Fluidkammer zur Aufnahme des Fluids, und mit einem Halteelement, wobei der Ventilsitz eine Fluidpassage für ein Passieren des Fluids heraus aus der Fluidkammer umschließt, wobei der Ventilkörper und das Halteelement in Wirkverbindung mit dem in der Fluidkammer aufgenommenen Fluid stehen, wobei das Halteelement eine in Richtung auf den Ventilsitz wirkende Haltekraft auf den Ventilkörper ausübt, wobei dem Ventilkörper eine der Fluidkammer zugewandte Wirkfläche zugeordnet ist, wobei in dem Fall, dass das in der Fluidkammer aufgenommene Fluid mit einer Kraft oder einem Druck oberhalb eines für den Ventilkörper vorgegebenen Grenzwerts auf die Wirkfläche des Ventilkörpers einwirkt, sich der Ventilkörper von dem Ventilsitz entfernt, wobei dem Halteelement eine der Fluidkammer zugewandte Wirkfläche zugeordnet ist, wobei in dem Fall, dass das in der Fluidkammer aufgenommene Fluid mit einer Kraft oder einem Druck oberhalb eines für das Halteelement vorgegebenen Grenzwerts auf die Wirkfläche des Halteelements einwirkt, die auf den Ventilkörper einwirkende Haltekraft abnimmt, und wobei der Ventilkörper und/oder das Halteelement derartig ausgestaltet und/oder angeordnet sind, dass das in der Fluidkammer aufgenommene Fluid stärker auf das Halteelement als auf den Ventilkörper einwirkt.

Das einströmende Fluid wirkt sich somit auf den Ventilkörper und auf ein Halteelement aus. Der besondere Effekt besteht darin, dass die Auswirkung auf das Halteelement stärker - oder alternativ formuliert: verstärkt - ist und/oder früher als in Bezug auf den Ventilkörper stattfindet. Damit setzt die Wirkung des Fluids zunächst bzw. stärker bei der Haltekraft ein und erst später bzw. verzögert wird - durch die Bewegung des Ventilkörpers - die Fluidpassage für den Fluss des Fluids geöffnet. Ein sprunghaftes Öffnungs- und Verschlussverhalten lässt sich somit über die Wahl und Gestaltung des Mechanismus bzw. der Wechselwirkung realisieren.

Eine Ausgestaltung besteht darin, dass der für den Ventilkörper vorgegebene Grenzwert höher als der für das Halteelement vorgegebene Grenzwert ist. In dieser Ausgestaltung ist somit ein höherer Druck bzw. eine höhe Kraft erforderlich, damit sich der Ventilkörper bewegt, als für das Reduzieren der Haltekraft. Das Größenverhältnis zwischen den Grenzwerten zueinander ist dabei entweder zeitlich konstant oder variabel. Die Variabilität ergibt sich beispielsweise, indem zumindest ein Grenzwert variabel ist.

Eine Ausgestaltung sieht vor, dass der für den Ventilkörper vorgegebene Grenzwert und/oder der für das Halteelement vorgegebene Grenzwert variabel sind/ist. In dieser Ausgestaltung handelt es sich nicht um zwei - insbesondere zeitlich - feste Grenzwerte, sondern mindestens ein Grenzwert kann sich verändern. Die Änderung des Grenzwerts ist beispielsweise ein Schritt während des Reagierens des Ventils auf einen Überdruck im Fluid. Dies ist somit eine gezielte Änderung des Grenzwerts. Dies im Gegensatz zu einer sich beispielsweise durch Alterungseffekte einstellenden Änderung eines Grenzwerts.

Eine Ausgestaltung besteht darin, dass der für den Ventilkörper vorgegebene Grenzwert abhängig von der auf den Ventilkörper einwirkenden Haltekraft ist. So bewirkt z. B. in einer Ausgestaltung ein Herabsetzen der Haltekraft, dass ein geringerer Druck ausreicht, damit der Ventilkörper aus dem Ventilsitz bewegt wird. Dies ist also eine beispielhafte Ausgestaltung eines zeitlich variablen Grenzwerts.

Eine Ausgestaltung sieht vor, dass die Wirkfläche des Ventilkörpers kleiner als die Wirkfläche des Halteelements ist. Je geringer die Wirkfläche, desto geringer ist die Kraft- bzw. Druckübertragung des Fluids auf den Ventilköper bzw. das Halteelement. Somit wirkt sich das gleiche Fluid auch stärker bzw. schneller auf das Halteelement als auf den Ventilkörper aus.

Eine Ausgestaltung besteht darin, dass die Wirkfläche des Ventilkörpers und/oder die Wirkfläche des Halteelements variabel sind/ist. Indem zumindest eine Wirkfläche variabel ist, ändert sich damit auch das Maß der Kraftübertrag des Fluids auf die zugeordnete Komponente (also Ventilkörper oder Halteelement).

Eine Ausgestaltung sieht vor, dass eine Ausdehnung der Wirkfläche des Ventilkörpers abhängig von der auf den Ventilkörper einwirkenden Haltekraft ist. Dies ist somit eine Ausgestaltung, in welcher die Wirkfläche des Ventilkörpers variabel ist. Vorzugsweise wird dabei die Ausdehnung (alternative Bezeichnung: Erstreckung oder Abmessung) der Wirkfläche (also die effektive Wirkfläche) größer, wenn die Haltekraft abnimmt.

Eine Ausgestaltung besteht darin, dass das Halteelement in dem Fall, dass die auf den Ventilkörper einwirkende Haltekraft abnimmt, zumindest einen Abschnitt der Wirkfläche des Ventilkörpers für ein Einwirken des Fluids freigibt.

Eine Ausgestaltung sieht vor, dass der Ventilkörper und das Halteelement derartig ausgestaltet und angeordnet sind, dass der Ventilkörper und das Halteelement sich unter Einwirkung des Fluids in unterschiedliche Richtungen bewegen, und dass die Haltekraft in dem Fall abnimmt, dass sich ein Abstand zwischen dem Halteelement und dem Ventilkörper vergrößert. Vorzugsweise sind der Ventilkörper und das Halteelement beweglich im Ventil ausgestaltet und angeordnet. Vorzugsweise ist die Haltekraft in einer Ausgestaltung abhängig vom Abstand zwischen dem Halteelement und dem Ventilkörper.

In einer Ausgestaltung stehen der Ventilkörper und das Halteelement bei maximaler Haltekraft in - vorzugsweise unmittelbarem - Kontakt miteinander. In einer weiteren Ausgestaltung wird durch den Kontakt zwischen beiden ein Teil der Wirkfläche des Ventilkörpers durch das Halteelement verdeckt.

Eine Ausgestaltung sieht vor, dass zwischen dem Halteelement und dem Ventilkörper eine magnetische Anziehungskraft wirkt. Eine magnetische Anziehungskraft ergibt sich beispielsweise dadurch, dass in einer der Komponenten (Halteelement bzw. Ventilkörper) ein Magnet eingebracht ist und die andere Komponente z. B. zumindest teilweise ferromagnetisch ist. Durch die Auswahl eines Magneten kann beispielsweise auch der Druck definiert werden, ab dem das Ventil den Ablass-Ausgang für den Druckabfall öffnet.

Eine Ausgestaltung besteht darin, dass der Ventilkörper und/oder das Halteelement zumindest teilweise in der Fluidkammer angeordnet sind/ist und/oder einen Teil der Fluidkammer bilden/bildet. In dieser Ausgestaltung besteht ein direkter Kontakt des Fluids mit dem Ventilkörper und/oder dem Halteelement.

In einer Ausgestaltung verbinden die Fluidkammer und die Fluidpassage einen Eingang des Ventils mit einem Ablass-Ausgang. Der Ablass-Ausgang (eine alternative Bezeichnung ist z. B. Überdruck-Ausgang) besteht dabei zusätzlich zu dem eigentlichen Ausgang des Ventils, über welchen das Fluid das Ventil im Normalfall verlässt.

Im Einzelnen gibt es eine Vielzahl von Möglichkeiten, das erfindungsgemäße Ventil auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen die:
- Fig. 1: eine schematische Darstellung des Ventils in der Ruhestellung mit geschlossener Fluidpassage und
- Fig. 2: das Ventil der Fig. 2 mit geöffneter Fluidpassage.

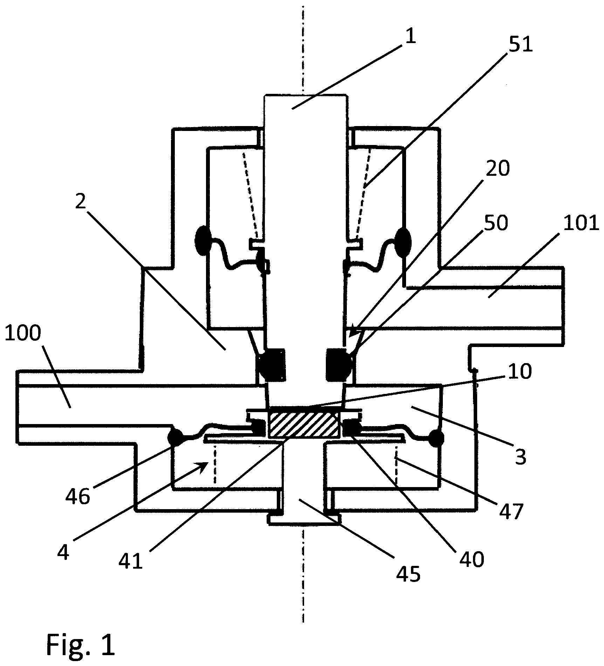

Die Fig. 1 zeigt einen Schnitt durch ein erfindungsgemäßes Ventil.

Dargestellt ist der (Normal-)Zustand, dass der Überdruck- oder Ablass-Ausgang 101 nicht geöffnet ist. Das Fluid steht somit unter einem zulässigen Druck. In diesem Zustand fließt das Fluid von dem Eingang 100 über die Fluidkammer 3 zu dem - hier nicht dargestellten - Standard-Fluid-Ausgang. Im Fall eines Überdrucks gelangt das Fluid - entsprechend der Funktion des Ventils - aus der Fluidkammer 3 über die Fluidpassage 20 zu dem Ablass-Ausgang 101.

Die Fluidpassage 20 wird von dem Fluidsitz 2 umfasst und ist im hier gezeigten Zustand durch den Ventilkörper 1 im Zusammenwirken mit einem Dichtelement 50 verschlossen. Die Fluidpassage 20 erweitert sich in der dargestellten Ausgestaltung konisch in Richtung des Ablass-Ausgangs 101, wodurch ein Schließen des Ventils erleichtert werden soll. Das Dichtelement 50 befindet sich in einer umlaufenden Nut des Ventilkörpers 1 und wird dadurch bei einer Bewegung des Ventilkörpers 1 mitbewegt.

Der Ventilkörper 1 wird durch ein Halteelement 4 in Richtung des Ventilsitzes 20 gezogen. Hierfür übt ein Magnet 41 als Teil des Halteelements 4 eine magnetische Anziehungskraft als Haltekraft auf den zumindest teilweise ferromagnetischen Ventilkörper 1 aus. Weiterhin übt ein Federelement 51 eine Kraft in Richtung des Ventilsitzes 20 auf den Ventilkörper 1 aus.

Das Halteelement 4 verfügt über einen Stempel 45, in dessen Stirnseite sich - in der dargestellten Variante - der Magnet 41 befindet, sowie über eine Membran 46, die hier einen Teil der Wandung der Fluidkammer 3 bildet. Die Membran 46 und der Stempel 45 sind dabei so ausgestaltet und miteinander gekoppelt, dass sich eine Bewegung der Membran 46 auf den Stempel 45 auswirkt. Der Stempel 45 wird hin insbesondere in axialer Richtung bewegt. Dabei wirkt auf den Stempel 45 und dadurch entgegen der Kraftrichtung des Fluids ein rückstellendes Federelement 47.

In der gezeigten Ausgestaltung befinden sich die Stirnseiten des Stempels 45 und des Ventilkörpers 1 in der Fluidkammer 3 und daher auch im Fluid. Dabei sind die Stirnflächen des Stempels 45 und des Ventilkörpers 1 jeweils so plan und parallel zueinander realisiert, dass sie im dargestellten Normal-Zustand direkt aufeinander - und insbesondere frei von dem Fluid zwischen ihnen - aufliegen.

Durch das Aufliegen ergibt sich, dass die dem Ventilkörper 1 zugeordnete Wirkfläche 10, gegen welche das Fluid in der Fluidkammer 3 drücken kann, im Normal-Zustand klein ist. Die Wirkfläche 10 ist hier insbesondere nur durch den schmalen Spalt zwischen der Stirnseite des Ventilkörpers 1 und dem Innendurchmesser der Fluidpassage 20 und somit in dem dargestellten Beispiel nur durch das Dichtelement 50 gegeben. Dem gegenüber verfügt das Halteelement 4 durch die Stirnseite des Stempels 45 und auch durch die mit dem Stempel 45 mechanisch gekoppelte Membran 46 über eine deutlich größere Wirkfläche 40. Dies bedeutet, dass sich das Fluid stärker bzw. früher gegenüber dem Halteelement 4 als gegenüber dem Ventilkörper 1 auswirkt.

Der Ventilkörper 1 und das Halteelement 4 sind so ausgestaltet und in dem Ventil angeordnet, dass sie durch das Fluid in jeweils eine Bewegungsrichtung bewegbar sind. In der dargestellten Variante verlaufen die Bewegungsrichtungen von Halteelement 4 und Ventilkörper 1 einander entgegengesetzt entlang einer gemeinsamen Achse. Diese Achse ist hier zudem die Symmetrieachse der rotationssymmetrischen Komponenten Halteelement 4 und Ventilkörper 1.

Durch die zwischen Halteelement 4 und Ventilkörper 1 wirkende magnetische Haltekraft bewegt sich das Halteelement 4 erst dann, wenn durch das Fluid ein für das Halteelement 4 vorgegebener Grenzwert überschritten worden ist.

Lösen sich das Halteelement 4 und der Ventilkörper 1 voneinander, so wird ein weiterer Teil der Wirkfläche 10 des Ventilkörpers 1 freigegeben, sodass das Fluid stärker gegen den Ventilkörper 1 - hier zeichnerisch nach oben - wirken und ihn damit heraus aus dem Ventilsitz 2 drücken kann. Indem sich der Abstand zwischen Ventilkörper 1 und Halteelement 4 vergrößert, nimmt zudem die Haltekraft des Halteelements 4 auf den Ventilkörper 1 ab. Dadurch verringert sich der dem Ventilkörper 1 zugeordnete Grenzwert, bei dessen Überschreiten der Ventilkörper 1 sich aus der Normal- oder Verschluss-Position heraus bewegen und die Fluidpassage 20 öffnen kann.

Durch die von der Wechselwirkung mit dem Halteelement 4 abhängige Erstreckung der Wirkfläche 10 des Ventilköpers 1 sowie durch die Abstandsabhängigkeit der magnetische Kraft als Haltekraft wird somit insgesamt ein sprunghaftes Öffnen des Ventils bewirkt.

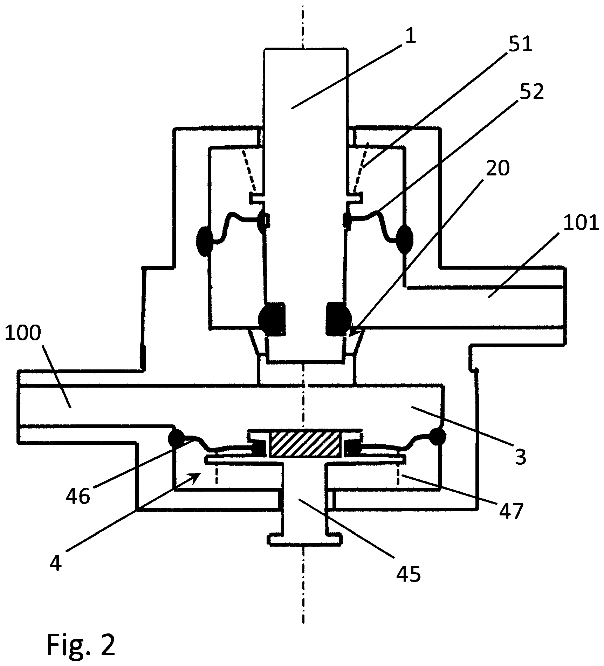

Der Zustand des geöffneten Ventils während des Ablassens des Fluids und damit die Reduktion des Überdrucks zeigt die Fig. 2.

Das Fluid fließt vom Eingang 100 über die Fluidkammer 3 und die Fluidpassage 20 zum Ablass-Ausgang 101. Dabei sind die Membran 46 und der Stempel 45 - hier zeichnerisch nach unten - gegen das Federelement 47 gedrückt. Da hier die Membran 46 und der mittig in ihr angeordnete Stempel 45 einen Teil der Wandung der Fluidkammer 3 bilden, vergrößert sich damit auch dessen Volumen.

Das Fluid drückt zudem den Ventilkörper 1 entgegen dem von einer Elastomer-Dichtung 52 geschützten Federelement 51 nach oben.

Ist der Druck des Fluids ausreichend abgefallen, so wird der Ventilkörper 1 durch das ihm zugeordnete Federelement 51 in den Ventilsitz 2 zurück bewegt. Gleichzeitig kehrt die Membran 46 in ihren Ausgangszustand zurück und wird der Stempel 45 durch das ihm zugeordnete Federelement 47 nach oben gedrückt.

Durch diese beiden Bewegungen, die durch die Federelemente 51, 47 erzeugt werden, nähern sich auch der Ventilkörper 1 und das Halteelement 4 so aneinander an, dass die Haltekraft zwischen beiden wirkt und es zu einem Berühren der Kontaktflächen kommt.

In der dargestellten Ausgestaltung sorgen die planen Stirnflächen dafür, dass das Fluid zwischen Ventilkörper 1 und Halteelement 4 verdrängt wird. In einer alternativen - nicht dargestellten - Variante ist ein Dichtformkörper vorgesehen, der eine Verdrängung des Fluids bewirkt. Alternativ sind z. B. Dichtlippen vorhanden, die für eine Art Saugnapfeffekt sorgen.

Berühren sich die Stirnflächen, so ist die Fluidpassage 20 wieder geschlossen und das Fluid fließt wieder von dem Eingang 100 zu dem normalen - hier nicht dargestellten - Ausgang.

### Bezugszeichenliste

- **1**: Ventilkörper
- **2**: Ventilsitz
- **3**: Fluidkammer
- **4**: Halteelement
- **10**: Wirkfläche
- **20**: Fluidpassage
- **40**: Wirkfläche
- **41**: Magnet
- **45**: Stempel
- **46**: Membran
- **47**: Federelement
- **50**: Dichtelement
- **51**: Federelement
- **52**: Dichtung
- **100**: Eingang
- **101**: Ablass-Ausgang

## Patentansprüche

1. Ventil für ein Fluid,
mit einem Ventilkörper (1) und einem Ventilsitz (2),
mit einer Fluidkammer (3) zur Aufnahme des Fluids, und
mit einem Halteelement (4),
wobei der Ventilsitz (2) eine Fluidpassage (20) für ein Passieren des Fluids heraus aus der Fluidkammer (3) umschließt,
wobei der Ventilkörper (1) und das Halteelement (4) in Wirkverbindung mit dem in der Fluidkammer (3) aufgenommenen Fluid stehen,
wobei das Halteelement (4) eine in Schließrichtung auf den Ventilsitz (2) wirkende Haltekraft auf den Ventilkörper (1) ausübt,
wobei dem Ventilkörper (1) eine der Fluidkammer (3) zugewandte Wirkfläche (10) zugeordnet ist,
wobei in dem Fall, dass das in der Fluidkammer (3) aufgenommene Fluid mit einer Kraft oder einem Druck oberhalb eines für den Ventilkörper (1) vorgegebenen Grenzwerts auf die Wirkfläche (10) des Ventilkörpers (1) einwirkt, sich der Ventilkörper (1) von dem Ventilsitz (2) entfernt, wobei dem Halteelement (4) eine der Fluidkammer (3) zugewandte Wirkfläche (40) zugeordnet ist,
**dadurch gekennzeichnet, dass** in dem Fall, dass das in der Fluidkammer (3) aufgenommene Fluid mit einer Kraft oder einem Druck oberhalb eines für das Halteelement (4) vorgegebenen Grenzwerts auf die Wirkfläche (40) des Halteelements (4) einwirkt, die auf den Ventilkörper (1) einwirkende Haltekraft abnimmt, und wobei der Ventilkörper (1) und/oder das Halteelement (4) derartig ausgestaltet und/oder angeordnet sind, dass das in der Fluidkammer (3) aufgenommene Fluid stärker auf das Halteelement (4) als auf den Ventilkörper (1) einwirkt.

2. Ventil nach Anspruch 1,
wobei der für den Ventilkörper (1) vorgegebene Grenzwert höher als der für das Halteelement (4) vorgegebene Grenzwert ist.

3. Ventil nach Anspruch 1 oder 2,
wobei der für den Ventilkörper (1) vorgegebene Grenzwert und/oder der für das Halteelement (4) vorgegebene Grenzwert variabel sind/ist, und
wobei der für den Ventilkörper (1) vorgegebene Grenzwert abhängig von der auf den Ventilkörper (1) einwirkenden Haltekraft ist.

4. Ventil nach einem der Ansprüche 1 bis 3,
wobei die Wirkfläche (10) des Ventilkörpers (1) kleiner als die Wirkfläche (40) des Halteelements (4) ist.

5. Ventil nach einem der Ansprüche 1 bis 4,
wobei die Wirkfläche (10) des Ventilkörpers (1) und/oder die Wirkfläche (40) des Halteelements (4) variabel sind/ist, und
wobei eine Ausdehnung der Wirkfläche (10) des Ventilkörpers (1) abhängig von der auf den Ventilkörper (1) einwirkenden Haltekraft ist.

6. Ventil nach Anspruch 5,
wobei das Halteelement (4) in dem Fall, dass die auf den Ventilkörper (1) einwirkende Haltekraft abnimmt, zumindest einen Abschnitt der Wirkfläche (10) des Ventilkörpers (1) für ein Einwirken des Fluids freigibt.

7. Ventil nach einem der Ansprüche 1 bis 6,
wobei der Ventilkörper (1) und das Halteelement (4) derartig ausgestaltet und angeordnet sind, dass der Ventilkörper (1) und das Halteelement (4) sich unter Einwirkung des Fluids in unterschiedliche Richtungen bewegen, und
wobei die Haltekraft in dem Fall abnimmt, dass sich ein Abstand zwischen dem Halteelement (4) und dem Ventilkörper (1) vergrößert.

8. Ventil nach einem der Ansprüche 1 bis 7,
wobei zwischen dem Halteelement (4) und dem Ventilkörper (1) eine magnetische Anziehungskraft wirkt.

9. Ventil nach einem der Ansprüche 1 bis 8,
wobei der Ventilkörper (1) und/oder das Halteelement (4) zumindest teilweise in der Fluidkammer (3) angeordnet sind/ist und/oder einen Teil der Fluidkammer (3) bilden/bildet.

## Claims

1. A valve for a fluid,
comprising a valve body (1) and a valve seat (2);
comprising a fluid chamber (3) for receiving the fluid; and
comprising a holding element (4),
wherein the valve seat (2) encloses a fluid passage (20) for passage of the fluid out of the fluid chamber (3),
wherein the valve body (1) and the holding element (4) are in operative connection with the fluid received in the fluid chamber (3),
wherein the holding element (4) exerts a holding force on the valve body (1), the holding force acting on the valve seat (2) in the closing direction,
wherein an effective surface (10) facing the fluid chamber (3) is associated with the valve body (1),
wherein in the event that the fluid received in the fluid chamber (3) acts on the effective surface (10) of the valve body (1) with a force or a pressure above a limit value predefined for the valve body (1), the valve body (1) moves away from the valve seat (2),
wherein an effective surface (40) facing the fluid chamber (3) is associated with the holding element (4),
**characterized in that** in the event that the fluid received in the fluid chamber (3) acts on the effective surface (40) of the holding element (4) with a force or a pressure above a limit value predefined for the holding element (4), the holding force acting on the valve body (1) decreases, and
wherein the valve body (1) and/or the holding element (4) is/are configured and/or arranged such that the fluid received in the fluid chamber (3) acts on the holding element (4) more strongly than on the valve body (1).

2. The valve according to claim 1,
wherein the limit value predefined for the valve body (1) is higher than the limit value predefined for the holding element (4).

3. The valve according to claim 1 or 2,
wherein the limit value predefined for the valve body (1) and/or the limit value predefined for the holding element (4) is/are variable, and
wherein the limit value predefined for the valve body (1) is dependent on the holding force acting on the valve body (1).

4. The valve according to any of claims 1 to 3,
wherein the effective surface (10) of the valve body (1) is smaller than the effective surface (40) of the holding element (4).

5. The valve according to any of claims 1 to 4,
wherein the effective surface (10) of the valve body (1) and/or the effective surface (40) of the holding element (4) is/are variable, and
wherein an extension of the effective surface (10) of the valve body (1) is dependent on the holding force acting on the valve body (1).

6. The valve according to claim 5,
wherein in the event that the holding force acting on the valve body (1) decreases, the holding element (4) exposes at least a portion of the effective surface (10) of the valve body (1) for an action of the fluid.

7. The valve according to any of claims 1 to 6,
wherein the valve body (1) and the holding element (4) are configured and arranged such that the valve body (1) and the holding element (4) move in different directions under the action of the fluid, and
wherein the holding force decreases in the event that a distance between the holding element (4) and the valve body (1) increases.

8. The valve according to any of claims 1 to 7,
wherein a magnetic attraction force acts between the holding element (4) and the valve body (1).

9. The valve according to any of claims 1 to 8,
wherein the valve body (1) and/or the holding element (4) is/are at least partly arranged in, and/or form(s) part of, the fluid chamber (3).

## Revendications

1. Soupape pour un fluide,
comprenant un corps de soupape (1) et un siège de soupape (2),
comprenant une chambre de fluide (3) pour la réception du fluide, et
comprenant un élément de retenue (4),
le siège de soupape (2) renfermant un passage de fluide (20) pour un passage du fluide hors de la chambre de fluide (3),
le corps de soupape (1) et l'élément de retenue (4) étant en liaison fonctionnelle avec le fluide reçu dans la chambre de fluide (3),
l'élément de retenue (4) exerçant sur le corps de soupape (1) une force de retenue laquelle agit dans le sens de fermeture sur le siège de soupape (2),
une surface effective (10) tournée vers la chambre de fluide (3) étant associée au corps de soupape (1),
le corps de soupape (1) s'éloignant du siège de soupape (2) au cas où le fluide reçu dans la chambre de fluide (3) agit sur la surface effective (10) du corps de soupape (1) avec une force ou une pression supérieure à une valeur limite prédéfinie pour le corps de soupape (1),
une surface effective (40) tournée vers la chambre de fluide (3) étant associée à l'élément de retenue (4),
**caractérisée en ce que**
au cas où le fluide reçu dans la chambre de fluide (3) agit sur la surface effective (40) de l'élément de retenue (4) avec une force ou une pression supérieure à une valeur limite prédéfinie pour l'élément de retenue (4), la force de retenue agissant sur le corps de soupape (1) diminue, et
le corps de soupape (1) et/ou l'élément de retenue (4) est/sont réalisé(s) et/ou agencé(s) de telle sorte que le fluide reçu dans la chambre de fluide (3) agit plus fortement sur l'élément de retenue (4) que sur le corps de soupape (1).

2. Soupape selon la revendication 1,
la valeur limite prédéfinie pour le corps de soupape (1) étant supérieure à la valeur limite prédéfinie pour l'élément de retenue (4).

3. Soupape selon la revendication 1 ou 2,
la valeur limite prédéfinie pour le corps de soupape (1) et/ou la valeur limite prédéfinie pour l'élément de retenue (4) étant variable(s), et
la valeur limite prédéfinie pour le corps de soupape (1) dépendant de la force de retenue agissant sur le corps de soupape (1).

4. Soupape selon l'une des revendications 1 à 3,
la surface effective (10) du corps de soupape (1) étant inférieure à la surface effective (40) de l'élément de retenue (4).

5. Soupape selon l'une des revendications 1 à 4,
la surface effective (10) du corps de soupape (1) et/ou la surface effective (40) de l'élément de retenue (4) étant variable(s), et
une extension de la surface effective (10) du corps de soupape (1) dépendant de la force de retenue agissant sur le corps de soupape (1).

6. Soupape selon la revendication 5,
l'élément de retenue (4) libérant au moins une partie de la surface effective (10) du corps de soupape (1) pour permettre au fluide d'agir au cas où la force de retenue agissant sur le corps de soupape (1) diminue.

7. Soupape selon l'une des revendications 1 à 6,
le corps de soupape (1) et l'élément de retenue (4) étant réalisés et agencés de telle sorte que le corps de soupape (1) et l'élément de retenue (4) se déplacent dans des sens différents sous l'action du fluide, et
la force de retenue diminuant au cas où une distance entre l'élément de retenue (4) et le corps de soupape (1) augmente.

8. Soupape selon l'une des revendications 1 à 7,
une force d'attraction magnétique agissant entre l'élément de retenue (4) et le corps de soupape (1).

9. Soupape selon l'une des revendications 1 à 8,
le corps de soupape (1) et/ou l'élément de retenue (4) étant au moins en partie agencé(s) dans la chambre de fluide (3) et/ou formant une partie de la chambre de fluide (3).
